# EUROPEAN PATENT APPLICATION

(11) **EP 4 527 558 A1**
(43) Date of publication of application: **26.03.2025**
(21) Application number: 23199489.8
(22) Date of filing: 25.09.2023
(51) Int. Cl.: B25F 5/00, B23Q 11/00

(54) **DRIVETRAIN FOR A MOBILE POWER TOOL, MOBILE POWER TOOL AND USE OF A MECHANICAL BRAKE**

(71) Applicant: Festool GmbH, 73240 Wendlingen am Neckar (DE)
(72) Inventor: SCHOCK, Christian, 73614 Schorndorf (DE); SCHMID, Markus, 73066 Uhingen (DE); PFEIFER, Elias, 70569 Stuttgart (DE); EGGERT, Dominik, 8046 Zürich (CH); EVERTZ, Jörg, 8903 Birmensdorf (CH); GERSTER, Dimitri, 8049 Zürich (CH); HOFMANN, Martin, 8824 Schönenberg (CH); SOMMER, Remo, 7002 Chur (CH); SPINELLI, Nico, 8047 Zürich (CH); STÄUBLI, Tom, 8004 Zürich (CH); UWE, Werner, 8825 Hütten (CH); ZIMMERMANN, Thierry, 8055 Zürich (CH)
(74) Representative: Maiwald GmbH

(57) **Abstract**

A drivetrain (16) for a mobile power tool is shown. The drivetrain (16) comprises a gear stage (28) having an input side and an output side. The drivetrain (16) also comprises an implement holder (40) configured to be coupled to an implement (20) and drivingly coupled to the output side of the gear stage (28). Moreover, the drivetrain (16) comprises a brake unit (42) drivingly coupled to the input side of the gear stage (28) and configured to permit a movement of the implement holder (40) in a disengaged state of the brake unit (42) and to decelerate or stop the movement of the implement holder (40) in an engaged state of the brake unit (42). Furthermore, a mobile power tool comprising such a drivetrain (16) is presented. Additionally, a use of a mechanical brake at an input side of a gear stage (28) of a drivetrain (16) for a mobile power tool is explained.

## Description

The present invention relates to a drivetrain for a mobile power tool.

The present invention is additionally directed to a mobile power tool comprising such a drivetrain.

Furthermore, the present invention relates to a use of a mechanical brake.

In the present context, the mobile power tool may be any kind of a mobile power tool. Examples of mobile power tools include mobile saws such as circular saws, band saws, table saws, or jig saws, grinders, routers, sanders and drills. In the present context, the term mobile power tool summarizes handheld power tools and semi-stationary power tools.

Each mobile power tool comprises an implement which is configured to perform an operation on a work piece. Usually, such an implement comprises one or more sharp edges. It is well known that such an implement also presents a certain risk of injury when being moved, e.g. rotated or oscillated, by operating the drivetrain of the associated mobile power tool.

In order to prevent or at least mitigate injuries resulting from an undesired contact between an implement and a part of a human body, passive means are known. In this context, passive means essentially relate to elements blocking or complicating access of a part of the human body, e.g. a hand or a finger, to the implement. Such elements may be formed as covers or barriers.

Also active means for preventing or at least mitigating injuries resulting from an undesired contact between an implement and a part of a human body are known. Such active means comprise at least one movable element and at least one actuator configured to move this element. Such means are sometimes called active injury mitigation systems or AIM systems. An example of an AIM system is a so-called emergency brake. Such a brake comprises a movable element that can selectively engage an implement in order to decelerate or stop a movement of the implement. Thereby, a risk of injury is at least reduced.

However, active means for preventing or at least mitigating injuries usually have a certain weight and require a certain space to be mounted on the power tool. Especially when used in combination with a mobile power tool, the required space and the added weight of such an active means usually complicates the operation of the associated mobile power tool since a user thereof needs to manipulate the additional weight. Handling of the power tool may be hindered by the active means occupying space on the mobile power tool.

Therefore, it is an object of the present invention to provide active means for preventing or at least mitigating injuries resulting from an operation of a mobile power tool, wherein the means for preventing or at least mitigating injuries are improved in that they do not complicate the operation of the associated mobile power tool or in that they at least complicate the operation to a reduced extent.

The problem is solved by a drivetrain for a mobile power tool. The drivetrain comprises a gear stage having an input side and an output side. Moreover, the drivetrain comprises an implement holder configured to be coupled to an implement and drivingly coupled to the output side of the gear stage. Additionally, the drivetrain comprises a brake unit drivingly coupled to the input side of the gear stage. The brake unit is configured to permit a movement of the implement holder in a disengaged state of the brake unit. Furthermore, the brake unit is configured to decelerate or stop the movement of the implement holder in an engaged state of the brake unit. In this context, a gear stage is to be understood as an assembly that is configured to receive mechanical power at the input side, e.g. in the form of a torque and a rotational speed provided via an input shaft or an input flange, and deliver mechanical power at the output side, e.g. in the form of a torque and a rotational speed provided via an output shaft or an output flange.

Moreover, the gear stage is configured to modify the torque and the rotational speed such that the torque provided at the input side is different from the torque provided by the output side and the rotational speed provided at the input side is different from the rotational speed provided by the output side. In a preferred case, the rotational speed at the output side is smaller than the rotational speed at the input side and the torque at the output side is higher than the torque at the input side. The implement holder is configured to be coupled to an implement, wherein an implement is a part configured to perform an operation on a work piece. Examples of implements are drills, cutters, saw blades and similar parts. The brake unit is or forms part of an emergency brake system or an AIM system. This means that the brake unit may be used to prevent or mitigate injury that may result from the operation of the drivetrain, especially in a case in which an implement is coupled to the implement holder. This is done in that the brake unit is transferred into its engaged state when a contact between the implement and a part of the human body is detected or a risk of injury resulting from a potential contact between the implement and a part of a human body is detected. In this context a proximity of a part of the human body to the implement may be detected. In the engaged state, the brake unit decelerates or stops the movement of the implement holder and, thus, an implement coupled thereto. Due to the fact that the brake unit is drivingly coupled to the input side of the gear stage, it may be sufficient for the brake to be able to support a smaller torque than a torque prevailing at the output side of the gear stage. In other words, using the gear stage, a torque prevailing at the output side of the gear stage leads to a reduced torque prevailing at the input side. The brake unit is drivingly coupled to the input side. Consequently, a comparatively small or reduced brake torque is sufficient to decelerate or stop the movement of the implement holder. Since the brake unit only needs to be configured to handle or counter-act this smaller torque, the brake unit may be designed in a comparatively compact and light-weight manner. This renders the brake unit suitable for mobile power tools since in such power tools it is important to keep the weight of the power tool as small as possible and to allow for simple manual handling thereof.

Concerning the gear stage, the present invention covers two alternatives. In a first alternative, the gear stage drivingly couples the implement holder and the brake unit. At the same time, the gear stage is configured to drive the implement holder. This means that the gear stage is configured to be coupled to a drive motor. In a second alternative, the gear stage drivingly couples the implement holder and the brake unit only. In this case, the gear stage is not configured to drive the implement holder. However, another gear stage may be used for driving the implement holder. Alternatively, the implement holder may be configured to be directly coupled to a drive motor, i.e. without a gear stage.

A further advantage of the low weight and the compactness of the brake unit is that such a brake unit influences a center of gravity of the drivetrain and a mobile power tool equipped therewith only to a comparatively small extent. Alternatively or additionally, due to the compactness, the brake unit may be located close to the center of gravity of the remaining components of the drivetrain and a mobile power tool equipped therewith. This further facilitates the manipulation of a mobile power tool equipped with such a drivetrain. According to a further alternative, the compactness of the brake unit may have the effect that different alternative positions for the brake unit are available on the mobile power tool. By choosing one of these alternative positions, a center of gravity of the mobile power tool may be deliberately influenced. In this context, the compact brake unit may be specifically used to counter-balance other components of the mobile power tool. Additionally or alternatively, the brake unit may be arranged on the mobile power tool such that it moves a center of gravity towards a gripping area or a handle of the mobile power tool. In a further example, the brake unit may be arranged close to a drive motor of the mobile power tool. In this position, the brake unit may counter-balance a comparatively heavy implement such as a saw blade or may counter-balance comparatively heavy components of the drivetrain located close to the implement holder.

Another advantage of the compactness of the brake unit is that it facilitates housing or sealing of the brake unit. To this end, only a comparatively small housing or enclosure is needed. The brake unit and the gear stage may be located inside the same housing or enclosure. This further increases the compactness of the drivetrain as a whole. A housing or enclosure has the advantage that the brake unit and/or the gear stage is protected from undesired environmental influences such as dust, dirt, oil and water.

The fact that the brake unit is coupled to an input side of the gear stage renders the brake unit independent from an implement that may be coupled to the implement holder. This is especially important in comparison to known AIM systems acting directly on the implement. Such known AIM systems need to be combined with specific types of implements in order to operate in a reliable manner. In contrast thereto, the brake unit of a drivetrain according to the present invention is able to operate reliably in combination with any type of implement that may be coupled to the implement holder.

In the context of the present invention, an implement coupled to the implement holder may function as a sensor configured to detect an effective contact or a proximity between the implement and a part of a human body, e.g. a finger or a hand. To this end, the implement may be subject to an alternating current and may operate as a capacitive sensor element.

In an example, the gear stage comprises at least one pair of toothed wheels engaging one another. Such a gear stage is structurally simple and robust. At the same time, the modification of the rotational speed and the torque may be provided in a reliable manner.

According to another example, the brake unit is located at a radial periphery of the gear stage. This renders the drivetrain compact.

According to an embodiment, the drivetrain further comprises a drive motor, wherein the drive motor is drivingly coupled to the input side of the gear stage. Thus, the gear stage drivingly couples the drive motor and the implement holder. Additionally, the gear stage drivingly couples the implement holder and the brake unit. In this context, the brake unit may be drivingly interposed between the drive motor and the gear stage. Such a drivetrain is very compact. At the same time, high torque may be provided at the implement holder.

In an example, the brake unit comprises a mechanical brake. This means that the brake unit at least comprises a brake element and a brake counter-element, wherein the brake counter-element is drivingly connected to the input side of the gear stage and the brake element is configured to selectively engage the brake counter-element such that a movement of the input side of the gear stage is decelerated or stopped. To this end, the brake element may be mounted to a housing or a frame of the mobile power tool. The deceleration or stopping relies on a mechanical effect.

The brake unit may comprise a friction element drivingly coupled to the input side of the gear stage and a thrust piece movably supported on a frame of the brake unit such that the thrust piece can selectively contact the friction element. The contact is subject to friction. Thus, in an engaged state of the brake unit, the thrust piece contacts the friction element. Due to the friction at the interface between the thrust piece and the friction element, a movement of the friction element is decelerated or stopped. In order to enhance the friction at the interface between the thrust piece and the friction element, a contact surface of the thrust piece may be specifically adapted to generate high friction forces. Alternatively or additionally, a friction pad may be located on the thrust piece. The same applies to the friction element. Such a brake unit allows to reliably decelerate or stop a movement of the implement holder.

According to an example, the friction element may fulfill additional functionalities or may form part of a sub-assembly of the drivetrain which fulfils functionalities other than the functionality of the brake unit. In an example, the friction element forms part of a sub-assembly which also comprises ventilation elements such as fan blades. According to an alternative, the friction element and the ventilation elements are formed integrally. According to another alternative, the friction element and the ventilation elements are separate elements which are assembled in order to form the sub-assembly. In this context, the ventilation elements and the friction element may be joint via an adhesive. The friction element is in particular a brake disk. Thus, the sub-assembly comprising the friction element additionally provides the functionality of a fan, for example configured to cool the drivetrain and/or the drive motor and/or an electronic component of the drivetrain or the mobile power tool equipped with the drivetrain.

It is understood that the friction element needs to be drivingly coupled to the input side of the gear stage. In this context, the friction element can be formed integrally with the input side of the gear stage. In case the input side is formed as an input shaft or as an input flange, the friction element may be integrally formed with the input shaft or the input flange. Alternatively, the friction element may be formed as a separate component which is drivingly coupled to the input side of the gear stage, e.g. to the input shaft or the input flange. In such examples, the friction element may be drivingly coupled to the input side via a positive locking (German: Formschluss), a friction locking (German: Reibschluss) or a joint (German: Stoffschluss).

A brake unit comprising a friction element may be called a friction brake. An example of a friction brake is a disk brake. In this example, the friction element has the form of a disk. Another example of a friction brake is a band brake. In this example, the thrust piece has the form of a band.

Preferably, the contact between the thrust piece and the friction element is subject to self-locking and/or self-reinforcement. In this context, self-reinforcement means that in a situation in which the thrust piece contacts the moving friction element, the friction at the interface between the thrust piece and the friction element has the effect that the thrust piece is pressed even stronger towards the friction element. In other words, upon an initial frictional contact between the friction element and the thrust piece, the friction between these elements has the effect that a force by which the thrust piece is pressed on the friction element is increased. As a consequence thereof, the friction at the interface between the thrust piece and the friction element is increased. Due to this effect, the brake unit is biased or tensioned further into the engaged state. Self-locking means that in a situation in which the thrust piece contacts the moving friction element, the frictional forces at the interface between the thrust piece and the friction element subject the thrust piece to a force towards the friction element which has the effect that the thrust piece may not move away from the friction element. Thus, the friction between the thrust piece and the friction element at least remains at a predefined level. Both self-locking and self-reinforcement have the effect that a movement of the implement holder may be decelerated or stopped reliably.

The thrust piece can be cam-shaped or wedge-shaped or piston-shaped. Such thrust pieces are structurally simple and mechanically stable such that a movement of the implement holder may be reliably decelerated or stopped. In case of a piston-shaped thrust piece, the thrust piece may comprise a plate-shaped friction element and a rod-shaped supporting and/or guiding element.

In an embodiment, the thrust piece is supported on a thrust piece carrier, wherein the thrust piece carrier is movably supported on the frame via two pivot arms. Thus, the engaged state of the brake unit and the disengaged state of the brake unit are both associated with respective pivotal positions of the two pivot arms. Using the pivot arms, the thrust piece carrier with the thrust piece and, thus, the brake unit as a whole, may be reliably transferred between the engaged state and the disengaged state.

In an example, the drivetrain may comprise an end stop for the thrust piece carrier. The end stop is associated with an engaged state of the brake unit. This means that the end stop and the thrust piece carrier are configured to contact each other if the brake unit is in the engaged state. Consequently, the thrust piece and the thrust piece carrier are in a well-defined position if the brake is in the engaged state.

It is noted that self-locking and/or self-reinforcement may be simply and reliably implemented using the thrust piece carrier movably supported on the frame via two pivot arms. In such a case, the frictional forces resulting from the contact between the thrust piece and the friction element and the pivotal position of the pivot arms associated with the engaged state of the brake unit need to be matched in a manner that the frictional forces hinder the pivot arms from leaving the pivotal position associated with the engaged state of the brake unit. In this context, the frictional forces occurring at the interface of the thrust piece and the friction element are essentially a function of the materials of the thrust piece and the friction element at the interface.

Each of the pivot arms may comprise a first pivot configured to allow the pivot arm to rotate around a first pivot axis and a second pivot configured to allow the pivot arm to rotate around a second pivot axis. A first straight line may connect the first pivot axis and the second pivot axis of a first one of the two pivot arms and a second straight line may connect the first pivot axis and the second pivot axis of a second one of the two pivot arms. The first straight line and the second straight line may extend in parallel. Thus, these lines together with a line connecting both the first pivot axes and a line connecting both second pivot axes form a parallelogram. This has the effect that an orientation of the thrust piece carrier and the thrust piece is not changed when altering a pivotal position of the pivot arms. This especially offers the possibility to arrange the thrust piece in parallel to the associated friction element. Consequently, a contact between the thrust piece and the friction element may be formed by a contact area. This allows for effective braking.

It is noted that in the above example, the parallelogram may only be formed if for each of the two pivot arms the first pivot axis and the second pivot axis are spaced apart from each other. More precisely, each pair of pivot axes out of the first pivot axis of the first pivot arm, the second pivot axis of the first pivot arm, the first pivot axis of the second pivot arm and the second pivot axis of the second pivot arm is located at a distance larger than zero. Moreover, the first pivot axis of the first pivot arm, the second pivot axis of the first pivot arm, the first pivot axis of the second pivot arm and the second pivot axis of the second pivot arm extend in parallel. Additionally, none of the first pivot axis of the first pivot arm, the second pivot axis of the first pivot arm, the first pivot axis of the second pivot arm and the second pivot axis of the second pivot arm are coaxial.

The thrust piece may be resiliently supported on the thrust piece carrier. To this end, the thrust piece may be supported on the thrust piece carrier via a spring element such as one or more disk springs or any other elastic or resilient element. Consequently, due to the resilient support, the thrust piece is movable to a certain degree with respect to the thrust piece carrier. This movability is helpful for compensating manufacturing and assembly tolerances. Optionally, the resilient support on the thrust piece carrier may be preloaded. When resiliently supported, the thrust piece abuts against the friction element with a predefined force substantially corresponding to an elastic force provided by the resilient support. This force acts between the thrust piece and the friction element. In this context, the elastic force also forms an upper limit of a force that can act between the thrust piece and the friction element. Consequently, the frictional support of the thrust piece on the thrust piece carrier protects the drivetrain against overload during braking. This allows to decelerate or stop the implement holder using a predefined force or torque.

In an embodiment, the drivetrain further comprises a retaining mechanism configured to secure the thrust piece carrier in a position associated with a distance between the thrust piece and the friction element. In other words, using the retaining mechanism, the thrust piece and the friction element are kept out of contact. This means that the brake unit is reliably kept in the disengaged state.

The brake unit may comprise an abutment element arranged adjacent to the friction element and on a side of the friction element opposite the thrust piece such that the friction element can selectively contact the abutment element. The contact may be subject to friction. Thus, in an engaged state of the brake unit, the friction element may be located between the abutment element and the thrust piece, wherein both a contact between the abutment element and the friction element and a contact between the friction element and the thrust piece are subject to friction. This allows for a highly effective deceleration or stopping of the implement holder. Moreover, such a configuration has the effect that a normal force to which the friction element is subject by the thrust piece is supported by the abutment element. Consequently, the friction element does not need to support such a normal force. In this example, the friction element may be elastically deformable at least to a certain extent, such that the friction element may be brought into contact with the abutment element using the thrust piece. In other words, the contact between the thrust piece and the friction element has the effect that the friction element is elastically deformed in a way that it also contacts the abutment element.

According to a further example, the abutment element comprises a friction pad. Consequently the friction between the abutment element and the friction element is enhanced.

The brake unit may comprise a brake actuator configured to selectively transition the brake unit from the disengaged state into the engaged state. Using such a brake actuator, the brake unit may be reliably transferred from the disengaged state into the engaged state. Examples of brake actuators include solenoids, shape memory alloy actuators, piezo actuators, and electric motors, e.g. servo motors.

The brake actuator may be configured to operate in accordance with two alternatives. In a first alternative, the brake actuator is configured to transition the thrust piece into a fully engaged state. The operation of the brake actuator and the movement of the thrust piece stop when the fully engaged state is reached. In a second alternative, the brake actuator is configured to apply an initial momentum on the thrust piece. Thereafter, the brake actuator and the thrust piece stop being drivingly coupled. In other words, the movement of the thrust piece can be subdivided into two phases. In a first phase, the thrust piece and the brake actuator are drivingly coupled and the thrust piece is moved using the brake actuator. In a subsequent second phase, the brake actuator and the thrust piece are not drivingly coupled anymore. In the second phase the thrust piece continues its movement due to the momentum that results from the coupling with the brake actuator in the first phase. Thus, in the second alternative, the thrust piece reaches the fully engaged state without being coupled to the brake actuator anymore. Optionally, the second alternative may be combined with the self-reinforcement as has been explained above. According to this option, the movement of the thrust piece is additionally driven by the self-reinforcement resulting from the initial contact between the thrust piece and the friction element.

According to an example, the brake actuator is drivingly coupled to at least one of the pivot arms. Preferably, the brake actuator is drivingly coupled to an end of at least one of the pivot arms which is arranged opposite the thrust piece. In such a configuration the pivotal position of the pivot arms may be simply and reliably altered using the brake actuator.

An actuation direction of the brake actuator may be oriented transverse to an axis of rotation of the implement holder and/or an axis of rotation of the gear stage. This allows the drivetrain to be configured in a compact manner.

According to an example, the brake unit comprises a reset mechanism configured to selectively transition the brake unit from the engaged state into the disengaged state. Thus, using the reset mechanism allows the brake unit to be used more than once, e.g. a second time and a third time.

In an example, the reset mechanism comprises an interface for a tool. Consequently, the brake unit can be transitioned from the engaged state into the disengaged state using this tool. In another example, the reset mechanism comprises a threaded hole. A threaded bolt may be provided in this threaded hole and an end of the threaded bolt may be configured to push the brake unit from the engaged state into the disengaged state. In another example, the reset mechanism comprises an electric and/or magnetic actuator.

The problem is additionally solved by a mobile power tool comprising a drivetrain according to the invention. As has been explained above, the drivetrain according to the invention is compact and has a comparatively low weight. Thus, also the mobile power tool is compact and low-weight. This facilitates manual handling of the mobile power tool. Moreover, all effects, details and advantages that have been explained in connection with the drivetrain according to the invention also apply to the mobile power tool according to the invention and vice versa.

The mobile power tool is for example a mobile saw such as a circular saw, a band saw, a table saw, or a jig saw, a grinder, a router or a drill.

The problem is also solved by a use of a mechanical brake at an input side of a gear stage of a drivetrain for a mobile power tool. In this context, an output side of the gear stage is associated with an implement holder configured to be coupled to an implement or associated with an implement of the mobile power tool. The input side is opposite to the output side. As has been explained before, a gear stage is to be understood as an assembly that is configured to receive mechanical power at the input side, e.g. in the form of a torque and a rotational speed provided via an input shaft or an input flange, and deliver mechanical power at the output side, e.g. in the form of a torque and a rotational speed provided via an output shaft or an output flange. Moreover, the gear stage is configured to modify the torque and the rotational speed such that the torque provided at the input side is different from the torque provided by the output side and the rotational speed provided at the input side is different from the rotational speed provided by the output side. In a preferred case, the rotational speed at the output side is smaller than the rotational speed at the input side and the torque at the output side is higher than the torque at the input side. The brake unit is or forms part of an emergency brake system or an AIM system. This means that the brake unit may be used to prevent or mitigate injury that may result from the operation of the drivetrain, especially in a case in which an implement is coupled to the implement holder. This is done in that the brake unit is transferred into its engaged state, thereby decelerating or stopping the movement of the implement holder and, thus, an implement coupled thereto. Due to the fact that the brake unit is drivingly coupled to the input side of the gear stage, it may be sufficient for the brake to be able to support a smaller torque than a torque prevailing at the output side of the gear stage. In other words, using the gear stage, a torque prevailing at the output side of the gear stage leads to a reduced torque prevailing at the input side. The brake unit is drivingly coupled to the input side. Consequently, a comparatively small or reduced brake torque is sufficient to decelerate or stop the movement of the implement holder. Since the brake unit only needs to be configured to handle or counter-act this smaller torque, the brake unit may be designed in a comparatively compact and light-weight manner. This renders the brake unit suitable for mobile power tools since in such power tools it is important to keep the weight of the power tool as small as possible and to allow for simple manual handling thereof. Moreover, all effects, details and advantages that have been explained in connection with the drivetrain according to the invention and the mobile power tool according to the invention also apply to the use according to the invention and vice versa.

Examples of the invention will be described in the following with reference to the following drawings.
- Figures 1 and 2: show a mobile power tool according to the invention comprising a drivetrain according to the invention from two different perspectives,
- Figure 3: shows the drivetrain of the mobile power tool of figures 1 and 2 in a separate, perspective representation, wherein also an implement is shown,
- Figure 4: shows an enlarged detail of figure 3,
- Figure 5: shows the detail of figure 4 along direction V in figure 4,
- Figure 6: shows a sectional view along plane VI in figure 5,
- Figures 7 to 9: illustrate an operation of the drivetrain according to the invention,
- Figure 10: shows the drivetrain of figure 3 in a schematic representation,
- Figure 11: illustrates a drivetrain according to another example of the invention,
- Figure 12: illustrates a drivetrain according to a further example of the invention, and
- Figure 13: illustrates a drivetrain according to still another example of the invention.

The figures are merely schematic representations and serve only to illustrate examples of the invention. Identical or equivalent elements are in principle provided with the same reference signs.

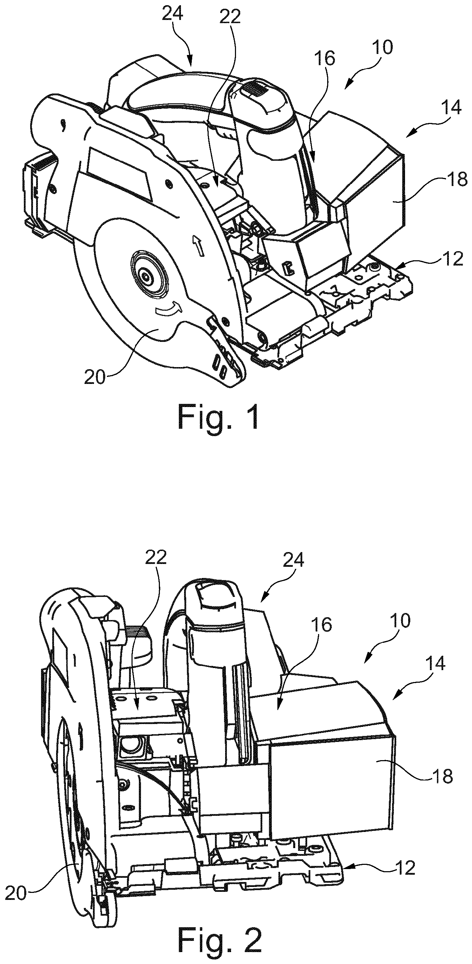

Figures 1 and 2 show a mobile power tool 10 which in the present example is a handheld circular saw.

The mobile power tool 10 comprises a plate unit 12 which is configured to be abutted against a guide rail or a workpiece to be modified using the mobile power tool 10.

A further functionality of the plate unit 12 is the support of further components of the mobile power tool 10.

In this context, a motor system 14 is coupled to on the plate unit 12. The motor system 14 comprises a drivetrain 16 which will be explained in more detail further below. The drivetrain 16 comprises a motor unit 18 configured to provide driving power for an implement holder 40. Moreover, the drivetrain 16, in particular the implement holder, is coupled to an implement 20 which in the present example is a saw blade.

The drivetrain 16 additionally comprises an AIM system 22 which may also be called an emergency brake system.

Furthermore, the mobile power tool 10 comprises a gripping unit 24 configured to hold the mobile power tool 10 and control the operation of the mobile power tool 10.

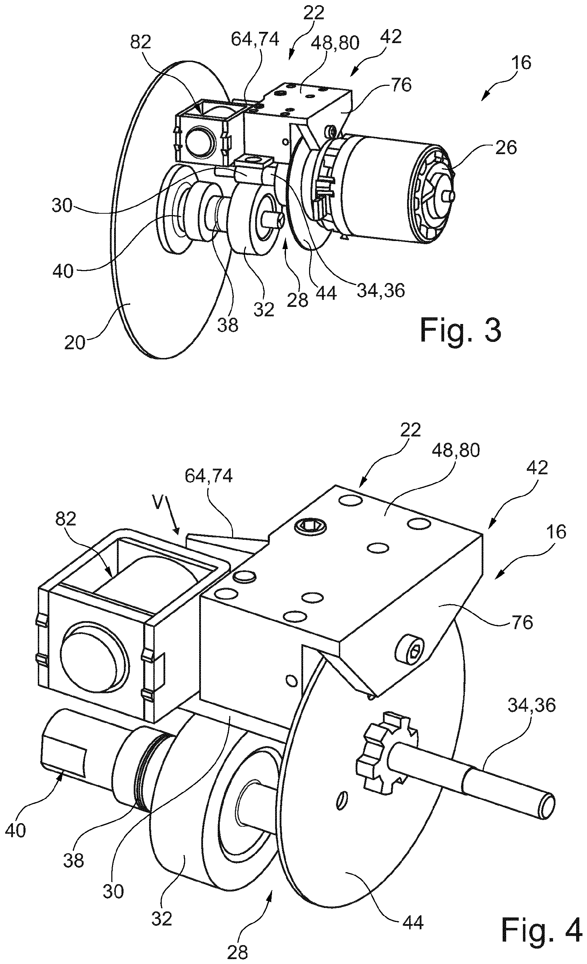

The drivetrain 16 is shown in figure 3 in more detail.

The drivetrain 16 comprises a gear stage 28 with a first toothed wheel 30 and a second toothed wheel 32 engaging one another.

The first toothed wheel 30 is arranged on an input shaft 34 of the gear stage 28. The input shaft 34 is coaxially coupled to an output shaft 36 of the drive motor 26.

In the present example, the input shaft 34 and the output shaft 36 of the drive motor 26 are formed integrally.

The second toothed wheel 32 is arranged on an output shaft 38 of the gear stage 28.

At an end of the output shaft 38, the implement holder 40 is provided. The implement holder 40 has the form of a flange and is configured to be coupled with the implement 20.

Consequently, the input shaft 34 forms an input side of the gear stage 28 and the output shaft 38 forms an output side of the gear stage 28.

As can be derived from the diameters of the first toothed wheel 30 and the second toothed wheel 32, a rotational speed of the input shaft 34 may be reduced using the gear stage 28. Consequently, a rotational speed of the output shaft 38 is smaller than a rotational speed of the input shaft 34.

At the same time, an input torque provided on the input shaft 34 using the drive motor 26 is increased using the gear stage 28. Consequently, a torque at the output shaft 38 which is applied to the implement 20, is higher than a torque provided at the input shaft 34 by the drive motor 26.

Using the drivetrain 16, power provided by the drive motor 26 may be transmitted to the implement 20 such that the implement 20 may rotate in order to modify the workpiece.

As has been mentioned before, the drivetrain 16 also comprises an AIM system 22.

The AIM system 22 comprises a brake unit 42 which may as well be called an emergency brake.

In the present example, the brake unit 42 is a mechanical brake unit, more precisely a disk brake.

This means that the brake unit 42 comprises a friction element 44 having the form of a disk and being drivingly coupled to the input shaft 34. The friction element 44 is rotationally fixed with respect to the input shaft 34.

In the present example, the friction element 44 is rotationally coupled to the input shaft 34 using positive locking (see especially figure 4).

More generally speaking, the brake unit 42 is drivingly coupled to the input side of the gear stage 28.

The brake unit 42 additionally comprises a thrust piece 46.

In the present example, the thrust piece 46 is movably supported on a frame 48 of the brake unit 20 such that the thrust piece 46 can selectively contact the friction element 44. The contact between the thrust piece 46 and the friction element 44 is subject to friction.

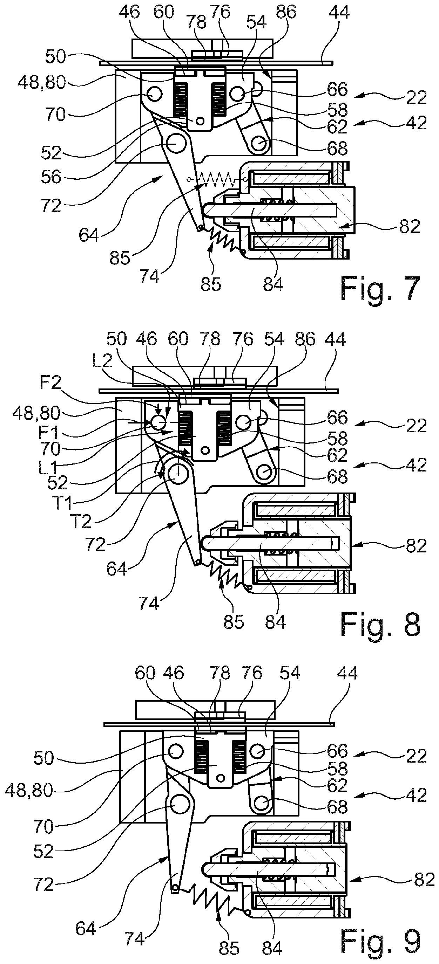

The thrust piece 46 is piston-shaped. This means that the thrust piece 46 comprises a plate-shaped friction element 50 and a rod-shaped supporting and/or guiding element 52. The plate-shaped friction element 50 and the rod-shaped supporting and/or guiding element 52 are formed integrally (see for example figure 7).

Moreover, the thrust piece 46 is supported on a thrust piece carrier 54.

To this end, the thrust piece carrier 54 comprises a guiding channel 56 and the rod-shaped supporting and/or guiding element 52 is at least partially received in the guiding channel 56.

Moreover, a plurality of disk springs 58 are arranged between the plate-shaped friction element 50 and the thrust piece carrier 54. In the present example, the disk springs 58 are preloaded.

Altogether, the thrust piece 46 is resiliently supported on the thrust piece carrier 54.

Furthermore, a friction pad 60 is arranged on the plate-shaped friction element 50 on a side opposite the rod-shaped supporting and/or guiding element 52.

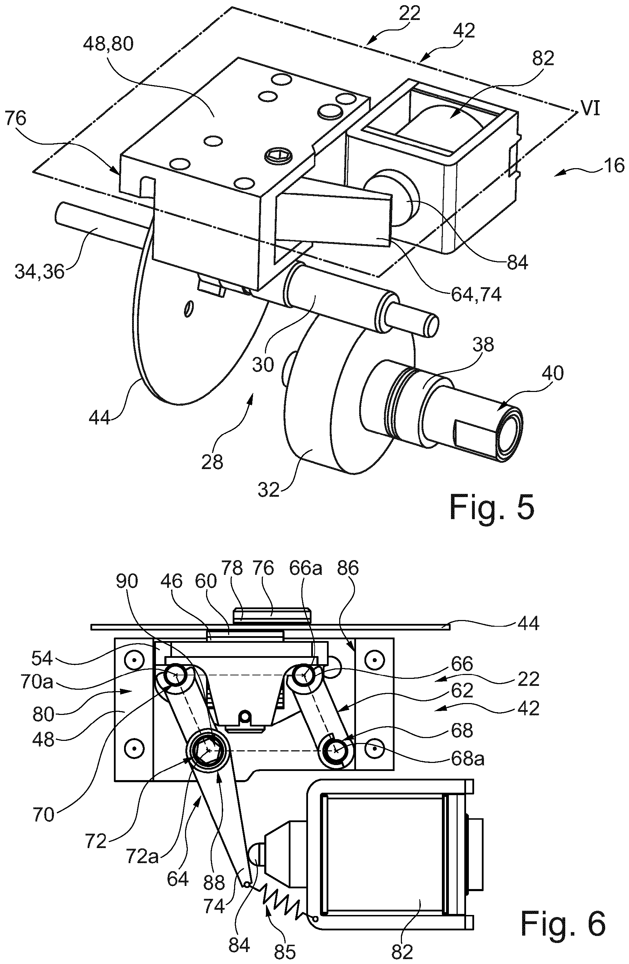

The thrust piece carrier 54 is movably supported on the frame 48 via two pivot arms 62, 64 (see for example figure 6).

The first pivot arm 62 comprises a first pivot 66 configured to allow the pivot arm 62 to rotate around a first pivot axis 66a and a second pivot 68 configured to allow the pivot arm to rotate around a second pivot axis 68a.

Using the first pivot 66, the first pivot arm 62 is rotatably supported on the thrust piece carrier 54.

Using the second pivot 68, the first pivot arm 62 is rotatably supported on the frame 48.

The second pivot arm 64 comprises a first pivot 70 configured to allow the pivot arm 64 to rotate around a first pivot axis 70a and a second pivot 72 configured to allow the pivot arm to rotate around a second pivot axis 72a.

Using the first pivot 70, the second pivot arm 64 is rotatably supported on the thrust piece carrier 54.

Using the second pivot 72, the second pivot arm 64 is rotatably supported on the frame 48.

In the example shown in the figures, the first pivot axis 66a, the second pivot axis 68a, the first pivot axis 70a and the second pivot axis 72a extend in parallel. Moreover, each pair of pivot axes out of the first pivot axis 66a, the second pivot axis 68a, the first pivot axis 70a and the second pivot axis 72a is located at a distance bigger than zero. In other words, none of the first pivot axis 66a, the second pivot axis 68a, the first pivot axis 70a and the second pivot axis 72a are coaxial.

Furthermore, all of the first pivot axis 66a, the second pivot axis 68a, the first pivot axis 70a and the second pivot axis 72a are arranged on the same side of the friction element 44.

In this context, a straight line connecting the first pivot axis 66a of the first pivot arm 62 and the first pivot axis 70a of the second pivot arm 64 extends in parallel to the friction element 44 when viewed in the direction of one of the first or second pivot axes 66a, 68a, 70a, 72a. This corresponds to the view of figure 6. In a case in which the friction element 44 is a brake disk, this direction may correspond to a radial direction of the friction element 44.

Also a straight line connecting the second pivot axis 68a of the first pivot arm 62 and the second pivot axis 72a of the second pivot arm 64 extends in parallel to the friction element 44 when viewed along a radial direction of the friction element 44 which in the present example is a brake disk.

Consequently, the straight line connecting the first pivot axis 66a and the first pivot axis 70a and the straight line connection the second pivot axis 68a and the second pivot axis 72a extend in parallel.

Additionally, a straight line connecting the first pivot axis 66a and the second pivot axis 68a of the first pivot arm 62 and a straight line connecting the first pivot axis 70a and the second pivot axis 72a of the second pivot arm 64 extend in parallel.

Altogether, in a view corresponding to figure 6, the pivot axes 66a, 68a, 70a, 72a form corners of a parallelogram. This has the effect that even though the first pivot arm 62 and the second pivot arm 64 are rotated, the thrust piece 46 and especially the friction pad 60 of the thrust piece 46 do not change their orientation. This means that in a view corresponding to figure 6, the thrust piece 46 and the friction pad 60 always stay parallel to the friction element 44.

Beyond that, the second pivot arm 64 comprises an actuation extension 74. The actuation extension 74 is a portion of the second pivot arm 64 which extends on a side of the second pivot 72 opposite the first pivot 70.

The actuation extension 74 is configured to cooperate with a brake actuator as will be explained in more detail further below.

The brake unit 42 also comprises an abutment element 76.

The abutment element 76 is arranged adjacent to the friction element 44, i.e. to the brake disk on a side of the friction element 44 opposite the thrust piece 46.

Also the abutment element 76 comprises a friction pad 78 configured to be contacted by the friction element 44.

In the present example, the frame 48 and the abutment element 76 are formed by the same part. This part may be called a brake caliper 80.

Moreover, the thrust piece 46 and drive motor 26 are arranged on opposite sides of the friction element 44.

Furthermore, the brake unit 42 comprises a brake actuator 82.

In the present example, the brake actuator 82 comprises a solenoid and an actuation rod 84. The brake actuator 82 is arranged on the frame 48 such that a tip of the actuation rod 84 may interact with the actuation extension 74.

The solenoid offers a good compromise between actuation force and actuation speed. In the present example, the solenoid is able to move the actuation rod 84 by 3 millimeters within 3 milliseconds.

Moreover, the solenoid may be operated using a comparatively low operational voltage, e.g. 42 V or lower.

The operation of the brake unit 42 will be explained in the following with reference to figures 7 to 9.

In this context, figure 7 shows a disengaged state of the brake unit 42. In this state, neither the thrust piece 46 nor the abutment element 76 contact the friction element 44. This means that both the thrust piece 46 and the abutment element 76 are kept at a distance from the friction element 44.

A retaining mechanism 85 may be used to secure the thrust piece carrier 54 in this position. In the present example, the retaining mechanism 85 comprises a spring. A first end of the spring is coupled to the actuation extension 74 of the second pivot arm 64 and a second end of the spring is coupled to a housing of the brake actuator 82. The spring biases the actuation extension 74 towards the housing of the brake actuator 82.

It is noted that the location of the retaining mechanism 85, i.e. the spring, may vary. An alternative retaining mechanism 85 is illustrated in figure 7 using dashed lines. This retaining mechanism 85 also comprises a spring.

Figure 8 illustrates an intermediate state of the brake unit 42 which is assumed after actuation of the brake actuator 82.

In the intermediate state shown in figure 8, the actuation rod 84 has been moved to the left side in figure 8 following an actuation of the brake actuator 82 (compare figures 7 and 8). This means that the actuation rod 84 protrudes by a greater extent from the remaining components of the brake actuator 82 than in the non-activated state.

Thereby, the tip of the actuation rod 84 acts on the actuation extension 74 of the second pivot arm 64. This has the effect that both the first pivot arm 62 and the second pivot arm 64 rotate clockwise around the respective second pivot axis 68a, 72a. Consequently, the thrust piece 46, more precisely the friction pad 60 of the thrust piece 46 abuts against the friction element 44. Thereby, a force is applied to friction element 44 that subsequently causes an elastic deformation of the friction element 44 such that the friction element 44 subsequently also contacts the abutment element 76, more precisely the friction pad 78 of the abutment element 76. In an alternative configuration, the friction element 44 may be axially movable with respect to the input shaft 34. In this case, the friction element 44 moves axially subsequently to being contacted by the thrust piece 46 instead of being deformed elastically.

In other words, in the intermediate state shown in figure 8, the friction element 44 is in contact with the thrust piece 46 while the abutment element 76 is not yet in abutment with the friction element 44. In this intermediate state, friction element 44 is frictionally coupled to the thrust piece 46 and not yet frictionally coupled to the abutment element 76. The thrust piece 46 frictionally engaging friction element 44 causes the friction element 44 to decelerate. Additionally, the friction element 44 is driven towards the abutment element 76 and subsequently contacts the abutment element 76. The contact between the friction element 44 and the abutment element 76 is subject to friction.

Moreover, the contact between the thrust piece 46 and the friction element 44 is subject to self-locking and self-reinforcement. This means that, due to the friction between the thrust piece 46 and the friction element 44, the first pivot arm 62 and the second pivot arm 64 are further rotated clockwise, thereby causing the thrust piece 46 to further press the friction element 44 against the abutment element 76. This means that the deceleration of the friction element 44 is further enhanced.

In more detail, the thrust piece 46 is subject to a frictional force F1 resulting from the contact between the thrust piece 46 and the friction element 44. Moreover, the thrust piece 46 is subject to a normal force F2 counter-acting the normal force by which the thrust piece 46 is pressed against the friction element 44. The forces F1, F2 also act on the first pivot 70 of the second pivot arm 64. In order to facilitate the explanation, the forces F 1, F2 have been represented next to the first pivot 70 of the second pivot arm 64.

When now considering the first pivot 70 of the second pivot arm 64, both forces F1, F2 lead to a torque around the second pivot 72. In this context, the frictional force F 1 is associated with a distance L1 and the normal force F2 is associated with a distance L2.

In the present example, the friction element 44 turns such that the portion of the friction element 44 interacting with the thrust piece 46 moves to the right in figures 7 to 9, i.e. towards the end stop 86.

Thus, due to the arrangement of the pivot axes 66a, 68a, 70a, 72a, the torque T1 resulting from the frictional force F1 is oriented clock-wise. This torque T1 may be calculated as the product of the frictional force F1 and the distance L1. The torque T2 resulting from the normal force F2 is oriented counter-clock-wise. This torque T2 may be calculated as the product of the normal force F2 and the distance L2.

The self-reinforcement results from the fact that a torque resulting from the vectorial addition of torques T1 and T2 is oriented clock-wise in the present example, i.e. pressing the thrust piece 46 against the friction element 44. The main factors for ensuring that the resulting torque is oriented clock-wise, and thus in the direction of rotation of friction element 44, are a friction coefficient governing the frictional contact between the thrust piece 46 and the friction element 44 and the location of the pivot axes 66a, 68a, 70a, 72a.

It is noted that even though the above explanation only relates to the second pivot arm 64, the same also applies to the first pivot arm 62.

Moreover, it is noted that the above explanations have been simplified in order to be able to clearly explain the underlying idea. Frictional forces resulting from the pivots and similar effects have been neglected.

Another effect of the self-reinforcement is that the coupling between the brake actuator 82 and the actuation extension 74 is terminated. Consequently, the actuation extension 74 may move together with the first pivot arm 62 and the second pivot arm 64 even though the actuation rod 84 of the brake actuator 82 does not move anymore.

Figure 9 shows a fully engaged state of the brake unit 42. In this state, the thrust piece carrier 54 abuts against an end stop 86 provided on the frame 48. Consequently, a further clockwise rotation of the first pivot arm 62 and the second pivot arm 64 is not possible anymore.

Due to the fact that the friction element 44 is drivingly coupled to the implement holder 40 and the implement 20 coupled thereto, not only a movement of the friction element 44 is decelerated and eventually stopped, but also a movement of the implement holder 40 and the implement 20. Thus, the brake unit 42 is configured to permit a movement of the implement holder 40 in a disengaged state of the brake unit 42 and to decelerate or stop the movement of the implement holder 40 in an engaged state of the brake unit 42.

It is noted that in the example shown in the figures, an actuation direction of the brake actuator 82, i.e. a direction of extension of the actuation rod 84, is oriented transverse to an axis of rotation of the implement holder 40 and an axis of rotation of the gear stage 28 which comes back to the axes of rotation of the input shaft 34 and the output shaft 38. This allows to configure the drivetrain 16 in a compact manner.

The brake unit 42 further comprises a reset mechanism 88. In the example shown in the figures, the reset mechanism 88 comprises a hexagonal tooling interface 90 which is configured to receive an hexagon socket screw key or Allen key (see especially figure 6). Using the reset mechanism 88 and especially such a hexagon socket screw key, the brake unit 42 may be transferred from the engaged state into a disengaged state. Thereby, using the key, the first pivot arm 62 and the second pivot arm 64 are rotated counter-clockwise.

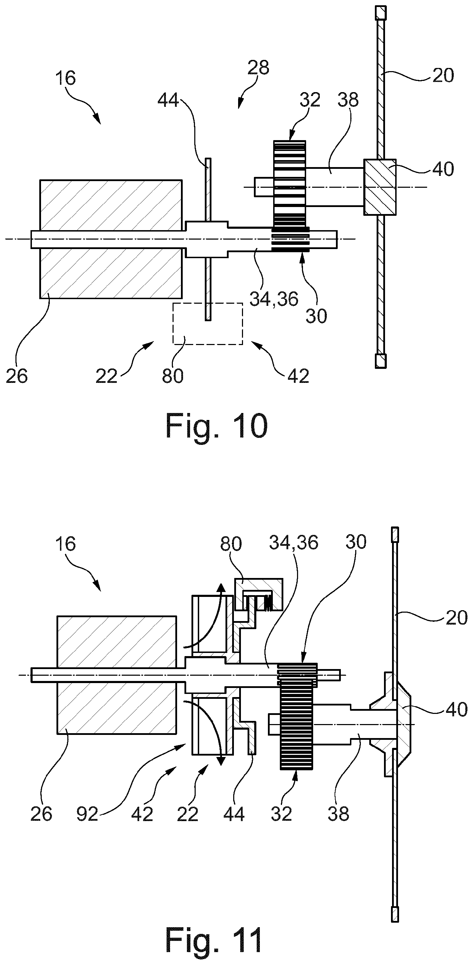

In figure 10, the mobile power tool 10 and in particular the drivetrain 16 that has been explained above with reference to figures 1 to 9 is represented in a schematic manner. In this representation, the fact that the brake unit 42 is drivingly coupled to the input side of the gear stage 28, i.e. the input shaft 34, is clearly visible.

Figure 11 shows an alternative example of the mobile power tool 10. The representation in figure 11 corresponds to the representation of figure 10.

In the following, only the differences with respect to the example of figures 1 to 10 will be explained.

In an example of figure 11, the drivetrain 16 comprises a fan 92 which is configured to generate a flow of air along components of the drivetrain 16, especially along or through the drive motor 26.

The fan 92 is arranged on the input shaft 34 and is rotationally fixed with respect to the input shaft 34.

Moreover, the fan 92 and the friction element 44, i.e. the brake disk, are formed integrally. This means that the fan 92 and the friction element 44 are formed by a single component of the drivetrain 16. In the present example, the friction element 44 may be made from a metal material and the fan 92 may be made from a plastics material. In this context, the fan 92 may be molded on the friction element 44. According to an alternative, the fan 92 and the friction element 44 may be connected via an adhesive.

It is noted that in the example of figure 11, the friction element 44 is drivingly coupled to the input shaft 34 via the plastics material which is also used for forming the fan 92. However, it is also possible to directly couple the friction element 44 to the input shaft 34 for example in the manner as shown in figure 4.

It is further noted that even though the diameter of the fan 92 and the friction element 44 are substantially the same in figure 11, this is not a strict requirement. Depending on the specific application it is also possible that the diameter of the friction element 44 is larger than the diameter of the fan 92 or that the diameter of the friction element 44 is smaller than the diameter of the fan 92.

Alternatively, both the fan 92 and the friction element 44 may be made from plastics material. In this case, the fan 92 and the friction element 44 may be produced integrally, e.g. by injection molding.

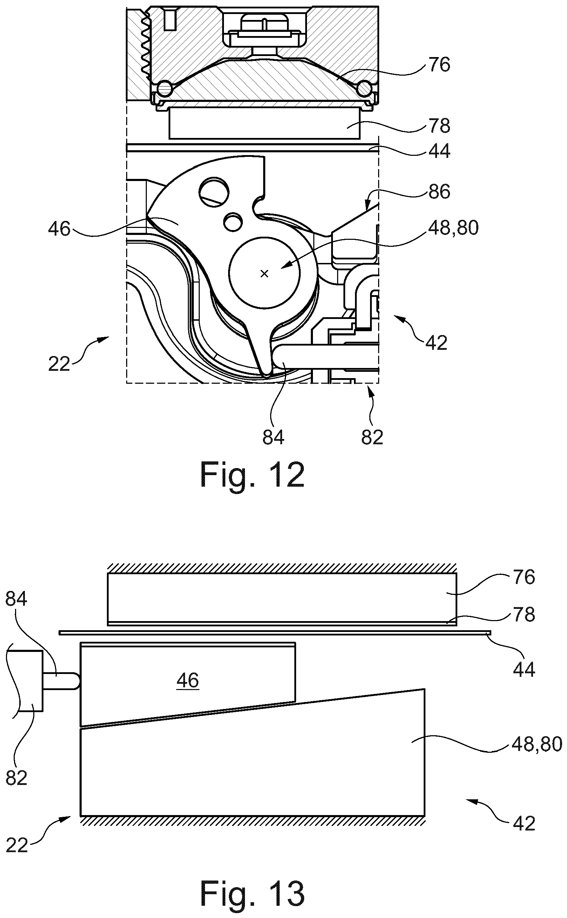

Figure 12 illustrates a further alternative example of the mobile power tool 10.

As before, only the differences with respect to the examples of figures 1 to 10 will be explained.

In the example of figure 12 the differences relate to the thrust piece 46 which is now cam-shaped. This implies that the thrust piece 46 may be rotated with respect to the frame 48. The brake actuator 82 may be configured in the same manner as in the example of figures 1 to 10.

Consequently, upon actuation of the brake actuator 82, the cam-shaped thrust piece 46 may be brought into frictional contact with the friction element 44.

The explanations provided in connection with figures 7 to 9 apply mutatis mutandis. This especially applies to the self-reinforcement and self-locking.

A further alternative is illustrated in figure 13.

As before, only the differences with respect to the examples of figures 1 to 10 will be explained.

In the example of figure 13 the differences once more relate to the thrust piece 46 which is now wedge-shaped.

A first side of the thrust piece 46 is configured to frictionally contact the friction element 44. This first side of the thrust piece 46 extends substantially in parallel to a plane defined by the friction element 44.

A second side of the thrust piece 46, which is located opposite the first side, is inclined with respect to the first side and, thus, also with respect to the plane defined by the friction element 44. The first side and the second side of the thrust piece 46 essentially define its wedge-shape.

The second side is supported on a sliding surface provided on the frame 48. The sliding surface extends substantially in parallel to the second side.

Additionally, the thrust piece 46 and the frame 48 may comprise one or more guiding and/or positive locking means for guiding the thrust piece 46 in a direction of translation of the thrust piece 46 along the second side of the frame 48. Additionally or alternatively, the one or more guiding and/or positive locking means may be used for attaching the thrust piece 46 to the frame 48 with respect to a direction orthogonal to the first side of the thrust piece 46 and/or orthogonal to the second side of the thrust piece 46. Thus the thrust piece 46 can be translated in a defined way from a disengaged state into the engaged state and vice versa. In this context, the disengaged state of the thrust piece 46 corresponds to a disengaged state of the brake unit 42 and an engaged state of the thrust piece 46 corresponds to an engaged state of the brake unit 42.

Additionally, the thrust piece 46 is translatorily movable with respect to the frame 48. More precisely, the thrust piece 46 is supported on the frame 48 such that it can move translatorily in a direction parallel to the plane defined by the friction element 44. However, due to the fact that the thrust piece 46 is supported on the sliding surface, a movement of the thrust piece in parallel to the plane defined by the friction element 44 also leads to a movement of the thrust piece 46 in a direction perpendicular to the plane defined by the friction element 44. In the representation of figure 13, the thrust piece 46 moves towards the friction element 44 if moved to the right and moves away from the friction element 44 if moved to the left.

As before, the brake actuator 82 may be configured in the same manner as in the example of figures 1 to 10. However, in the example of figure 13, the brake actuator 82 acts directly on the thrust piece 46. Especially in contrast to the examples of figures 3 to 9, no pivot arms are used. Due to this difference, the location of the brake actuator 82 also differs from the examples mentioned before. In this example the thrust piece 46 is at a first distance from the brake actuator 82 if the thrust piece 46 is in the disengaged state and at a second distance from the brake actuator 82 if the thrust piece 46 is in the engaged state. The second distance is larger than the first distance. The position of the thrust piece 46 at the first distance from the brake actuator 82 may be called an adjacent position.

Consequently, upon actuation of the brake actuator 82, the wedge-shaped thrust piece 46 may be brought into frictional contact with the friction element 44 by translatory moving the thrust piece 46 along the sliding surface.

In the example of figure 13, the thrust piece 46 is moved to the right. This corresponds to a direction of movement of the friction element 44.

The explanations provided in connection with figures 7 to 9 apply mutatis mutandis. This especially applies to the self-reinforcement and self-locking. This means that, due to the frictional forces, the wedge-shaped thrust piece 46 is further pulled along the sliding surface of the frame 48. Consequently, the wedge-shaped thrust piece 46 is pulled into the gap between the frame 48 and the friction element 44 thereby enhancing the brake force acting on the friction element 44.

In all the examples explained in connection with the figures, the brake unit 42 being a mechanical brake unit is used at an input side of a gear stage 28. This has the effect that the brake unit 42 only needs to be able to support a comparatively small torque. Consequently, the brake unit 42 may be designed in a compact and light-weight manner.

### List of reference signs

- 10: mobile power tool
- 12: plate unit
- 14: motor system
- 16: drivetrain
- 18: motor unit
- 20: implement
- 22: AIM system
- 24: gripping unit
- 26: drive motor
- 28: gear stage
- 30: first toothed wheel
- 32: second toothed wheel
- 34: input shaft of the gear stage
- 36: output shaft of the drive motor
- 38: output shaft of the gear stage
- 40: implement holder
- 42: brake unit
- 44: friction element
- 46: thrust piece
- 48: frame
- 50: plate-shaped friction element
- 52: rod-shaped supporting and/or guiding element
- 54: thrust piece carrier
- 56: guiding channel
- 58: disk spring
- 60: friction pad of the thrust piece
- 62: first pivot arm
- 64: second pivot arm
- 66: first pivot of the first pivot arm
- 66a: first pivot axis of the first pivot arm
- 68: second pivot of the first pivot arm
- 68a: second pivot axis of the first pivot arm
- 70: first pivot of the second pivot arm
- 70a: first pivot axis of the second pivot arm
- 72: second pivot of the second pivot arm
- 72a: second pivot axis of the second pivot arm
- 74: actuation extension
- 76: abutment element
- 78: friction pad of the abutment element
- 80: brake caliper
- 82: brake actuator
- 84: actuation rod
- 85: retaining mechanism
- 86: end stop
- 88: reset mechanism
- 90: tooling interface
- 92: fan

- F 1: frictional force
- F2: normal force
- L1: distance of the frictional force
- L2: distance of the normal force
- T1: torque resulting from the frictional force
- T2: torque resulting from the normal force

## Claims

1. A drivetrain (16) for a mobile power tool (10), the drivetrain (16) comprising
a gear stage (28) having an input side and an output side,
a implement holder (40) configured to be coupled to an implement (20) and drivingly coupled to the output side of the gear stage (28), and
a brake unit (42) drivingly coupled to the input side of the gear stage (28) and configured to permit a movement of the implement holder (40) in a disengaged state of the brake unit (42) and to decelerate or stop the movement of the implement holder (40) in an engaged state of the brake unit (42).

2. The drivetrain (16) of claim 1, further comprising a drive motor (26), wherein the drive motor (26) is drivingly coupled to the input side of the gear stage (28).

3. The drivetrain (16) of claim 1 or 2, wherein the brake unit (42) comprises a mechanical brake.

4. The drivetrain (16) of any of the preceding claims, wherein the brake unit (42) comprises a friction element (44) drivingly coupled to the input side of the gear stage (28) and a thrust piece (46) movably supported on a frame (48) of the brake unit (42) such that the thrust piece (46) can selectively contact the friction element (44), the contact being subject to friction.

5. The drivetrain (16) of claim 4, wherein the contact between the thrust piece (46) and the friction element (44) is subject to self-locking and/or self-reinforcement.

6. The drivetrain (16) of claim 4 or 5, wherein the thrust piece (46) is cam-shaped or wedge-shaped or piston-shaped.

7. The drivetrain (16) of any one of claims 4 to 6, wherein the thrust piece (46) is supported on a thrust piece carrier (54), wherein the thrust piece carrier (54) is movably supported on the frame (48) via two pivot arms (62, 64).

8. The drivetrain (16) of claim 7, wherein each of the pivot arms (62, 64) comprises a first pivot (66, 70) configured to allow the pivot arm (62, 64) to rotate around a first pivot axis (66a, 70a) and a second pivot (68, 72) configured to allow the pivot arm (62, 64) to rotate around a second pivot axis (68a, 72a), wherein a first straight line connects the first pivot axis (66a, 70a) and the second pivot axis (68a, 72a) of a first one of the two pivot arms (62, 64) and a second straight line connects the first pivot axis (66a, 70a) and the second pivot axis (68a, 72a) of a second one of the two pivot arms (62, 64), wherein the first straight line and the second straight line extend in parallel.

9. The drivetrain (16) of claim 7 or 8, wherein the thrust piece (46) is resiliently supported on the thrust piece carrier (54).

10. The drivetrain (16) of any one of claims 7 to 9, further comprising a retaining mechanism (85) configured to secure the thrust piece carrier (54) in a position associated with a distance between the thrust piece (54) and the friction element (44).

11. The drivetrain (16) of any of claims 4 to 10, wherein the brake unit (42) comprises an abutment element (76) arranged adjacent to the friction element (44) and on a side of the friction element (44) opposite the thrust piece (46) such that the friction element (44) can selectively contact the abutment element (76), the contact being subject to friction.

12. The drivetrain (16) of any one of the preceding claims, wherein the brake unit (42) comprises a brake actuator (82) configured to selectively transition the brake unit (42) from the disengaged state into the engaged state.

13. The drivetrain (16) of claim 12, wherein an actuation direction of the brake actuator (82) is oriented transverse to an axis of rotation of the implement holder (40) and/or an axis of rotation of the gear stage (28).

14. The drivetrain (16) of any one of the preceding claims, wherein the brake unit (42) comprises a reset mechanism (88) configured to selectively transition the brake unit (42) from the engaged state into the disengaged state.

15. A mobile power tool (10) comprising a drivetrain (16) according to any one of the preceding claims.

16. A use of a mechanical brake at an input side of a gear stage (28) of a drivetrain (16) for a mobile power tool (10).
